# EUROPEAN PATENT APPLICATION

(11) **EP 1 285 574 A2**
(43) Date of publication of application: **26.02.2003**
(21) Application number: 02255319.2
(22) Date of filing: 30.07.2002
(51) Int. Cl.: A01G 9/12

(54) **Method of producing a pot plant support**

(30) Priority: 02.08.2001 GB 0118841; 25.09.2001 GB 0123531
(71) Applicant: Aves, Lawrence George, Mildenhall, Suffolk IP28 7DG (GB)
(72) Inventor: Aves, Lawrence George, Mildenhall, Suffolk IP28 7DG (GB)
(74) Representative: Nash, Keith Wilfrid

(57) **Abstract**

A method of producing a pot plant support in which a plurality of garden canes (10) are inserted through holes (12) in a ring (14) and gathered together at the top to form a wig-wam like structure, and the ring is inserted into a plant pot (16) to fix the support in position, the ring and pot being relatively dimensioned so that the ring locates in the pot at a depth to be concealed by the compost in which the plant is grown. A plant pot support (30,32) is described for securing to the underside of the pot so as to extend laterally beyond the base of the pot, to reduce the tendency for the pot to tip, especially when fitted with a plant support structure as described.

## Description

### Field of the invention

This invention relates to a method of producing a pot plant support and to the combination of a plant pot with a plant support.

### Background to the invention

It is well known to insert a garden cane or stick down into the compost in a plant pot so that the cane or stick stands up from the plant pot to provide a plant support.

More complex supports for pot plants are also known, comprising a plurality of canes or sticks forming a wig-wam like structure, in some cases attached to a ring which is fitted externally to the top of the plant pot.

### The Invention

According to one aspect of the invention, there is provided a method of producing a plant support for a pot plant, according to which a plant supporting structure is formed by a plurality of garden canes or sticks which are gathered together at the top and below the top are spaced apart and are attached or attachable to a ring or frame located or locatable within the plant pot, and in use covering said ring or frame with the plant growing soil or compost in the pot.

According to another aspect of the invention, there is provided a plant pot and plant support combination comprising a plurality of garden canes or sticks which are gathered together at the top and below the top are spaced apart and are attached or attachable to a ring or frame, the shape of the ring or frame corresponding to that of the pot and the dimensions of the ring or frame relative to the dimensions of the plant pot being such that the ring or frame is horizontally locatable within the plant pot at a depth at which it will be covered with soil or compost when the plant pot is in use.

The term "garden canes or sticks" as used herein is to be understood to cover not only bamboo canes but analogous plant support sticks which may be made of any of a variety of materials, including plastics materials.

A preferred method utilises separate garden canes, typically 6 to 8 in number, and a fixing ring having spaced holes through which the canes are insertable. Having inserted the canes through the holes in the ring, then in either order the canes are tied together at the top and the ring is inserted into the plant pot, preferably to a depth within or just below the depth of the pot rim, i.e. the thickened part of the wall around the top of the pot, which is typically 20-30mm on depth. The canes preferably extend through the holes in the ring partly towards or fully to the interior base of the plant pot, and being gathered together at the top, are flexed so as to be pressed against the interior wall of the pot below the rim, thus rigidifying the wig-wam like structure. When the pot is in use, the compost or soil will cover the fixing ring and thus conceal it from view.

However, alternative methods and plant pot/plant support combinations within the scope of the invention may utilise an integrally formed fixing ring and canes, or a ring integrally formed with the pot, and/or frames instead of rings for locating inside square pots. In all cases, the ring or frame will be located or locatable at a depth within the plant pot so as to be covered by the soil or compost when the plant pot is in use.

In the preferred case of a ring separately formed from the plant pot, the ring and pot will be relatively dimensioned so that the ring locates at the appropriate depth within the pot. Plant pots are generally manufactures in a standard range of sizes, and in practice the invention will involve the manufacture of a range of sizes of fixing rings and/or frames, and a range on lengths of garden canes or sticks, so that users can select the appropriate combination for the size of pot and the nature of the plant to be grown in the pot.

According to another aspect of the invention a stand is provided in which a plant pot can be fitted, so that the stand extends radially beyond the circumference of the base of the pot, so as to reduce the tendency for the latter to tip over.

The stand may comprise a solid circular base the upper surface of which is dished centrally to form a circular recess to receive the base of the pot, preferably as a snug fit therein.

Alternatively the stand may comprise two elongate feet which are adapted to be joined midway along their length to form a cross as by a halving joint, and the upper edges are rebated to allow the vase of a pot to fit snugly between the four ends of the rebates.

The upper surface of the dished region of the circular base or the upper edges of the feet may be provided with upstanding lugs adapted to engage in holes in the base of the pot, to retain the pot in position therein.

Typically the lugs are bifurcated and of fir-tree configuration to assist their insertion into the holes.

The base or feet may be formed from wood, plastics, rubber or metal, or any combination thereof, and preferably are formed from or include a material of relatively high density as compared with the material from which the pot is formed, so as to lower the centre of gravity of the assembly of pot and stand.

The invention also lies in the combination of a plant pot and plant supporting structure as aforesaid when fitted to a stand to reduce the risk of the pot tipping over.

Where the plant pot is of generally square cross section the stand formed by the two orthogonal feet will also receive the base of such a pot. Where the stand is a solid base, the dished region in the upper surface for receiving the pot should also be square when viewed from above so as to accommodate the square base of the pot, and the base may also be generally square in shape when viewed from above.

### Description of embodiment

The invention will be further described with reference to the accompanying drawings, in which:-
Fig 1 is a pictorial view showing a plant pot/plant support combination, with a top layer of compost partly removed from the pot to show the fixing ring for the garden canes;
Figs 2 and 3 show the step of inserting the fixing ring or frame into the pot, respectively in the case of a round plant pot and in the case of a square plant pot;
Fig 4 shows the step of inserting the garden canes through the holes in the fixing ring, essentially to form the wig-wam like plant support structure illustrated in Fig 1, and
Figs 5 and 6 show how a stand or feet can be fitted to the underside of the pot, to reduce the risk of the pot tipping over.

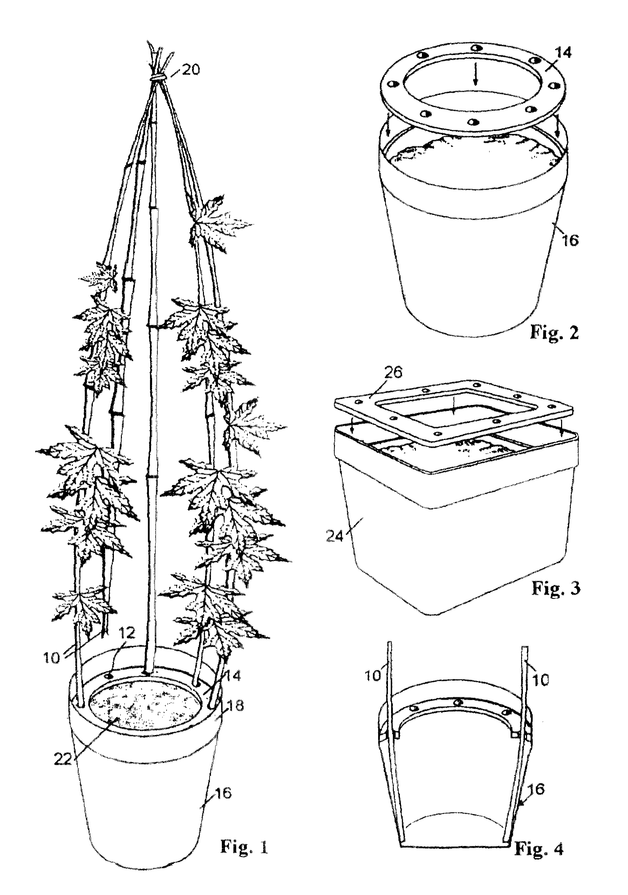

Referring to Fig 1, the illustrated plant support comprises 5 garden canes 10 inserted through holes 12 in a fixing ring 14 located within the pot 16 to a depth within the depth of the pot rim 18. The canes 10 are gathered together at the top by a tie 20. The compost 22 is partly removed from the top of the pot to shown the fixing ring through which the canes extend, but in practice the ring is at a depth such that it will be concealed by the compost when the pot is filled to a level just below the top of the rim.

Fig 2 shows the step of inserting the fixing ring 14 into the pot 16 which will normally be partly filed with compost first.

Fig 3 shows the step of inserting into the pot 24 a fixing frame 26 instead of a ring, in the case of a square pot.

Fig4 shows the step of inserting the garden canes 10 through the holes 12 in the fixing ring 14 so that their lower ends reach to the internal base of the pot 16. The canes are shown slightly flexed due to being gathered at the top as illustrated in Fig 1, whereby to press against the interior wall of the pot below the fixing ring.

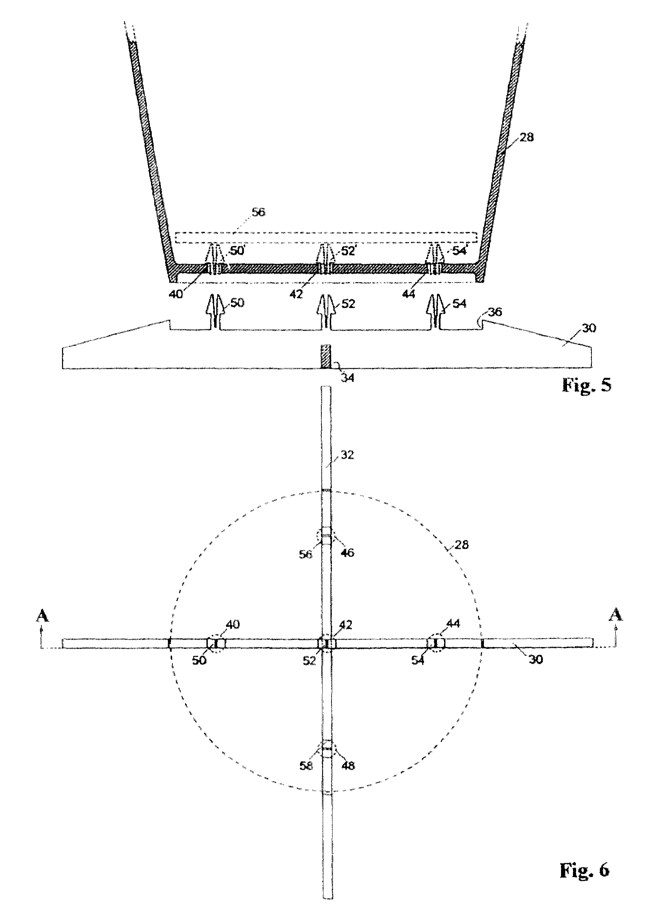

In order to stabilise a plant pot so as to reduce the risk of the opt tipping over, especially if fitted with a wig-wam like cane support as provided by the present invention, a stand or feet may be secured to the underside of the pot as shown in Figs 5 and 6.

Fig 5 shows the lower end of a plant pot 28 located just above a pair of orthogonal elongate feet 30, 32 such as are shown in the plan view of Fig 6. The feet are cut away as shown at 34 in Fig 5 to allow them to engage and form a cross.

The upper edge of each foot is rebated as shown at 36 in the case of foot 30 in Fig 5, to allow the periphery of the base of the pot 28 to be a snug fit in the four feet as shown by the dotted outline in Fig 6.

The base of the pot shown has five circular drainage holes shown dotted in Fig 6 at 40, 42, 44, 46 and 48 and foot 30 as three spaced apart resilient fixing lugs 50, 52 and 54 upstanding from its upper edge for engaging in holes 40, 42, and 44. The other foot 32 has two such lugs 56, 58 (not visible in Fig 5) but shown in Fig 6, which are arranged so as to engage in holes 46 and 48.

Each lug is bifurcated and is of fir tree configuration so that as it is pushed into a hole its two parts can be forced together to permit the larger part of its cross section to pass through the hole. Once through, the two parts spring apart and the lug is prevented from passing back through the hole. The three lugs are shown protruding through the holes 40, 42 and 44 in Fig 5, where they are shown in dotted outline at 50', 52' and 54'.

A drainage plate 56 (shown dotted in Fig 5) can be supported by the upper ends of the protruding lugs 50', 52', 54', which serve to support the plate clear of the base of the pot.

Since the lugs 50, 52 etc. are rectangular in cross-section (see Fig 6) they do not fully block the holes 40, 42 etc. (as can be seen in Fig 6) thereby permitting drainage of water from the pot, through the holes 40, 42 etc.

Although the pot support is shown in the form of a pair of feet crossing at right angles, they may be replaced by a solid circular platform, having a cross section similar to that of the side view of foot 30 and having bifurcated lugs such as 50, 52 etc. upstanding from a dished central region into which the base of the pot will fit.

The feet or platform may be formed from wood, plastics, rubber or metal, or any combination thereof, and preferably from material having a density significantly greater than that from which plant pots are made, so that the weight of the feet/platform is considerably greater than that of the pot.

## Claims

1. A method of producing a plant support for a pot plant, according to which a plant supporting structure is formed by a plurality of garden canes or sticks which are gathered together at the top and below the top are spaced apart and are attached or attachable to a ring or frame located or locatable within the plant pot, and in use covering said ring or frame with the plant growing soil or compost in the pot.

2. A method according to claim 1, wherein the pot includes a rim and tapers in cross section below the rim, and the dimensions of the ring or frame are selected so that the ring or frame is insertable into the pot to a position within or just below the depth of the rim.

3. A method according to claim 1 to 2, according to which the canes or sticks extend through holes in the ring or frame.

4. A method according to claim 3, according to which the canes or sticks are long enough that, due to the gathering together thereof at the top, they press against the inside wall of the pot below the ring or frame.

5. A method according to any of claims 1 to 4, according to which the plant supporting structure is an integral structure insertable into the plant pot.

6. A plant pot and plant support combination comprising a plurality of garden canes or sticks which are gathered together at the top and below the top are spaced apart and are attached or attachable to a ring or frame, the shape of the ring or frame corresponding to that of the pot and the dimensions of the ring or frame relative to the dimensions of the plant pot being such that the ring or frame is horizontally locatable within the plant the plant pot being such that the ring or frame is horizontally locatable within the plant pot at a depth at which it will be covered with soil or compost when the plant pot is in use.

7. The combination according to claim 6, wherein the ring or frame is located into the plant pot within or just below the depth of the rim of the pot.

8. A stand securable to the lower end of a plant pot so as to extend laterally of the wall of the pot to reduce the risk of the pot tipping over.

9. A stand as claimed in claim 8 comprising a solid plate the upper surface of which is dished to receive the lower end of a plant pot and having at least one resiliently deformable lug upstanding from the dished surface to engage in a hole in the base of the pot, to retain the latter in the stand.

10. A stand as claimed in claim 8 comprising elongate feet extending in the form of a cross, each rebated in its upper edge to provide a recess into which the base of the pot is a snug fit and the feet having at least one resiliently deformable lug upstanding from the rebated surface to engage in a hole in the base of the pot, to retain the latter therein.
